**Europäisches Patentamt**

**European Patent Office**

**Office européen des brevets**

(19)

(11) Veröffentlichungsnummer: **0 262 402 B1**

(12) **EUROPÄISCHE PATENTSCHRIFT**

(45) Veröffentlichungstag der Patentschrift: **27.03.91**

(51) Int. Cl.5: **B60S 1/60, B60S 1/52**

(21) Anmeldenummer: **87112463.2**

(22) Anmeldetag: **27.08.87**

(54) Waschanlage für Scheiben von Kraftfahrzeugen, insbesondere für Abdeckscheiben von Kraftfahrzeugleuchten.

(30) Priorität: **30.09.86 DE 3633154**

(43) Veröffentlichungstag der Anmeldung:
**06.04.88 Patentblatt 88/14**

(45) Bekanntmachung des Hinweises auf die
Patenterteilung:
**27.03.91 Patentblatt 91/13**

(84) Benannte Vertragsstaaten:
**DE ES FR GB IT**

(56) Entgegenhaltungen:
**DE-A- 1 630 394**
**DE-A- 1 755 710**
**FR-A- 2 523 909**
**US-A- 3 059 857**

(73) Patentinhaber: **ROBERT BOSCH GMBH**
**Postfach 50**
**W-7000 Stuttgart 1(DE)**

(72) Erfinder: **Dostler, Wolfgang**
**Steinstrasse 13**
**W-7598 Lauf(DE)**
Erfinder: **Leutsch, Rainer**
**Haabergstrasse 71**
**W-7582 Bühlertal(DE)**

## Beschreibung

### Stand der Technik

Die Erfindung geht aus von einer Waschanlage nach der Gattung des Hauptanspruchs. Es ist schon eine Waschanlage bekannt (DE-C-35 18 685), bei der in einem im Kolben bzw. im Düsenträger angeordneten Abschnitt der Verbindungsleitung ein Rückschlagventil angeordnet ist, das erst dann öffnet, wenn der Kolben und damit die Spritzdüse in ihre Betriebstellungen gelangt sind.

### Vorteile der Erfindung

Die erfindungsgemäße Waschanlage mit den kennzeichnenden Merkamalen des Hauptanspruchs hat demgegenüber den Vorteil, daß der Kolben in Verbindung mit der Zylinder-Innenwand und dem Überströmkanal ein Rückschlagventil bildet, das erst dann öffnet, wenn der Kolben seine Betriebsstellung fast erreicht hat. Ebenso wird nach dem Stillsetzen der Fördereinrichtung der Kolben durch die Feder wieder in seine Ruhestellung gedrückt, wobei der Kolben nach einer geringen Wegstrecke den Überströmkanal sperrt.

Durch die in den Unteransprüchen aufgeführten Maßnahmen sind vorteilhafte Weiterbildungen und Verbesserungen der im Hauptanspruch angegebenen Waschanlage möglich.

### Zeichnung

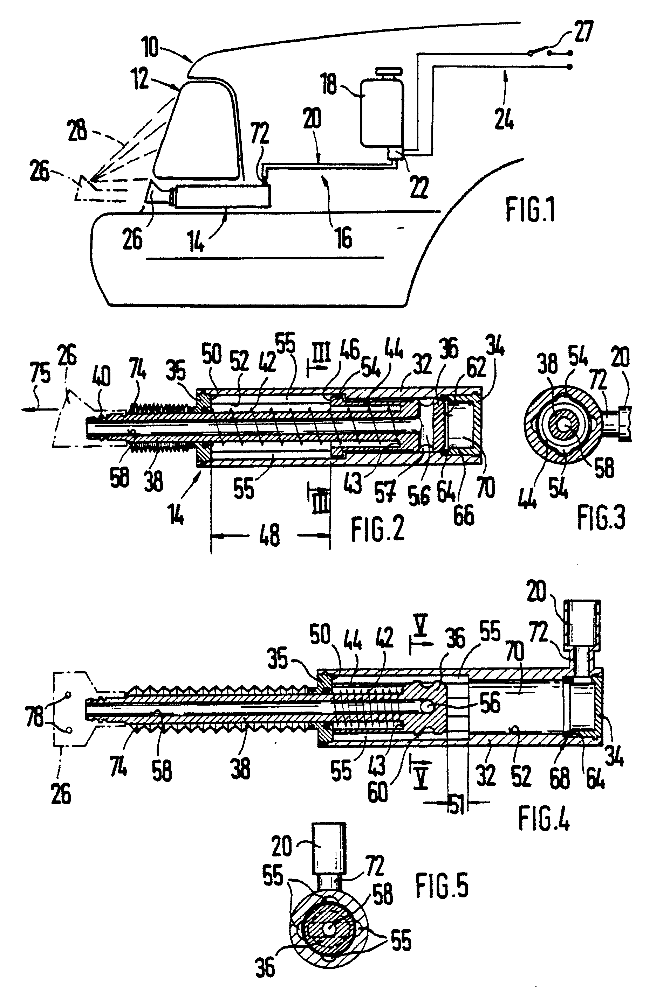

Ein Ausführungsbeispiel der Erfindung ist in der Zeichnung dargestellt und in der nachfolgenden Beschreibung näher erläutert. Es zeigen Figur 1 eine Prinzipskizze der Frontpartie eines Kraftfahrzeuges, in welche eine Waschanlage für die Fahrzeugscheinwerfer schematisch eingezeichnet ist, Figur 2 einen Längsschnitt durch eine zur Waschanlage gehörenden, in Ruhestellung befindlichen Sprüheinrichtung in vergrößerter Darstellung, Figur 3 einen Schnitt durch die Sprüheinrichtung gemäß Figur 2, entlang der Linie III-III in Figur 2, Figur 4 einen Längsschnitt durch die in Betriebsstellung befindliche, gegenüber der Darstellung gemäß Figur 2 um 90 Grad gedrehte Sprüheinrichtung und Figur 5 einen Schnitt durch die Sprüheinrichtung gemäß Figur 4, entlang der Linie V-V in Figur 4.

### Beschreibung des Ausführungsbeispiels

In einer in Figur 1 schematisch dargestellten Frontpartie eines Kraftfahrzeuges 10 sind Scheinwerfer 12 angeordnet, von denen einer in Figur 1 dargestellt ist. Dem Scheinwerfer 12 ist eine Sprüheinrichtung 14 zugeordnet, die zu einer Waschanlage 16 für die Abdeckscheiben der Kraftfahrzeugleuchten 12 gehört. Die Waschanlage 16 umfaßt weiter einen Vorratsbehälter 18 für die Waschflüssigkeit und eine Förderleitung 20 verbindet den Vorratsbehälter 18 mit der Sprüheinrichtung 14. An der Leitung 20 ist noch eine als Fördereinrichtung dienende, elektrisch betätigte Förderpumpe 22 angeordnet, welche an der Leitung 20 angeschlossen und mit dem Vorratsbehälter leitungsverbunden ist. Zum Betreiben der elektromotorischen Förderpumpe 22 weist die Waschanlage einen Arbeitsstromkreis 24 mit einem Schalter 27 auf. Bei der in Figur 1 dargestellten Anordnung befindet sich die Sprüheinrichtung 14 in ihrer sogenannten motorischen Förderpumpe 22 weist die Waschanlage einen Arbeitsstromkreis 24 mit einem Schalter 26 auf. Bei der in Figur 1 dargestellten Anordnung befindet sich die Sprüheinrichtung 14 in ihrer sogenannten Ruhestellung, in welcher eine zur Sprüheinrichtung 14 gehörende Spritzdüse 26 sich innerhalb der Karosserie des Kraftfahrzeuges 10 befindet. Wenn die Waschanlage aber durch Schließen des Schalters 26 betätigt wird, wird die Spritzdüse 26 in eine in Figur 1 strichpunktiert dargestellte Betriebsstellung gebracht, in welcher der aus der Düse austretende Spritzstrahl 28 die gesamte Abdeckscheibe der Kraftfahrzeugleuchte 12 erfaßt.

Der Aufbau der Sprüheinrichtung 14 ist insbesondere aus den Figuren 2 bis 4 ersichtlich. Sie weist als Gehäuse einen gestellfest angeordneten Zylinder 32 auf, der rohrförmig ausgebildet ist. Das eine Rohrende ist durch ein Bodenteil 34 verschlossen, während in die andere Rohrmündung ein Deckel 35 eingebracht ist. In dem Zylinder 32 ist ein Kolben 36 verschiebbar angeordnet. Weiter ist mit dem Kolben 36 ein rohrförmiger Düsenträger 38 verbunden, der den Deckel 35 durchdringt, und an dessen freien Ende 40 die Spritzdüse 26 gehalten ist. Der rohrförmige Düsenträger 38 weist einen kleineren Durchmesser auf als der Kolben 36. Er ist von einer als Schraubenfeder ausgebildeten Druckfeder 42 umgeben, die sich vorgespannt an einer Ringschulter 43 des Kolbens 36 einerseits und am Deckel 35 andererseits abstützt. Weiter weist der Kolben 36 einen hülsenförmigen Ansatz 44 auf, der sich in Richtung des Deckels 35 erstreckt. Der hülsenförmige Ansatz 44 umgibt die Schrauben-Druckfeder 42. Die freie Stirnfläche 46 des hülsenförmigen Ansatzes 44 befindet sich in einem Abstand 48 von der dieser Stirnfläche 46 zugewandten Fläche 50 des Deckels 35, so daß der Kolben 36 im Zylinder 32 um das Maß 48 innerhalb des Zylinders 32 verschiebbar ist. Die Deckelwand 50 bildet somit eine der Stirnfläche 46 des Ansatzes 44 zugewandte Fläche, welche für eine Begrenzung des Kolbenhubes 48 sorgt. Es ist klar, daß der Kolben 36, 44 innerhalb des Zylinders 42 gegen die Kraft der Schrauben-Druckfeder verschoben werden muß. Wie die Figuren 2 bis 4 zeigen, sind an der Zylinder-Innenwand 52 vier gleichmäßig verteilte, nutartige Kanäle 55 angeordnet, die sich vom Deckel 35 aus bis über die Stirnfläche 46 des Ansatzes 44 in den Bereich des Kolbens 36, 44 erstrecken. Der hülsenförmige Ansatz 44 des Kolbens hat zwei einander gegenüberliegende Vorsprünge 54 (Figuren 2 und 3), die sich in zwei der Kanäle 55 erstrecken und so für eine drehsichere Verschiebung des Kolbens 36, 44 und damit der Spritzdüse 26 sorgen. Weiter ist im Teil 36 des Kolbens 36, 44 eine Querbohrung 56 angeordnet, welche mit der Längsbohrung 58 des rohrförmigen Düsenträgers 38 leitend verbunden ist. Die Querbohrung 56 selbst mündet beidseitig in eine Ringnut 57, welche am Mantel 60 des Kolbenteils 36 angeordnet ist. Diese Mantelfläche 60 des Kolbenteils 36 ist passend an der Zylinder-Innenwand 52 geführt, während der hülsenförmige Ansatz 44 des Kolbens ein gewisses Spiel im Zylinder 32 hat. Auch die Vorsprünge 54 des Kolbenansatzes 44 weisen in den Längsnuten 55 ein geringes Spiel auf. Wie Figur 2 weiter zeigt, liegt das Teil 36 des Kolbens mit seiner von dem Düsenträger 38 abgewandten Seite mit seiner Stirnfläche 62 an einem Dichtungsring 64 an, der ringförmig ausgebildet und an der inneren Mantelfläche 52 des Zylinders 32 gehalten ist. Das als O-Ring ausgebildete Dichtungselement 64 wird dabei von einem ringförmigen Ansatz 66 des Zylinderbodens 34 mit Abstand vom Zylinderboden 34 in einer Erweiterung 68 der Zylinder-Innenwand 52 festgehalten. Es ergibt sich somit ein sogenannter Druckraum 70, der durch die Stirnfläche 62 des Kolbenteils 36, durch den Zylinderboden 34 bzw. durch dessen Ansatz 66 begrenzt ist. In diesen Druckraum 70 mündet, wie insbesondere Figur 4 zeigt, ein rohrförmiger Anschlußstutzen 72, der ebenfalls zur Förderleitung 20 gehört. Weiter weist die Sprüheinrichtung 14 noch einen schlauchförmigen Faltenbalg 74 auf, dessen eines Ende mit dem Deckel 35 und dessen anderes Ende mit der Spritzdüse 26 verbunden ist. Der Betrieb der Waschanlage 16 sei im folgenden näher erläutert.

Wenn zum Reinigen der Abdeckscheiben der Scheinwerfer 12, der Schalter 27 der Waschanlage 16 geschlossen wird und die Förderpumpe 22 anläuft, fördert diese Flüssigkeit aus dem Behälter 18 über die Förderleitung 20 in den Druckraum 70 der Sprüheinrichtung 14. Durch den dort stattfindenden Druckaufbau werden der Kolben 36, 44 und mit diesem auch der Düsenträger 38 und die Spritzdüse 26 in Richtung des Pfeiles 75 gegen die Kraft der Schrauben-Druckfeder 42 verschoben, bis die Stirnfläche 46 des hülsenförmigen Ansatzes 44 an der Stirnfläche 50 des Deckels 35 zur Anlage kommt (Figur 4). Dabei legen sowohl der Kolben 36, 44 als auch der Düsenträger 38 und die Spritzdüse 26 einen Hub zurück, der mit 48 bezeichnet ist. Somit ist die Spritzdüse 26 aus ihrer in Figur 2 dargestellten Ruhestellung in die in Figur 4 dargestellte Betriebsstellung gelangt. Kurz vor Erreichen dieser Betriebsstellung, d. h. kurz vor dem Zusammenwirken der Stirnfläche 46 des Kolbenansatzes 44 mit der Stirnfläche 50 des Deckels 35 gibt der Kolben 36 die Kanäle 55 über ein bestimmtes Teilstück 51 frei, so daß diese als Überströmkanäle wirken und die im Druckraum 70 befindliche Flüssigkeit in diese einströmen kann. Über die Ringnut 58 gelangt die Waschflüssigkeit zur Querbohrung 56 und strömt über diese in die Zentralbohrung 58 des rohrförmigen Düsenträgers 38. Von dieser Zentralbohrung 58 aus gelangt die Waschflüssigkeit zur Spritzdüse 26, wo sie aus Düsenmündungen 78 austritt und als Sprühstrahl 28 (Figur 1) auf die zu reinigende Scheibe gelangt. Da die radialen Vorsprünge 54 des hülsenförmigen Ansatzes 44 am freien Ende des hülsenförmigen Ansatzes angeordnet sind, werden auch die sogenannten Führungskanäle für die Ansätze 54 Überströmkanälen, welche den Druckraum 70 mit der Querbohrung verbinden. Zur Verbindungsleitung, welche die Düsen 26 mit der aus dem Vorratsbehälter 18 kommenden Waschflüssigkeit versorgt, gehören also die Förderpumpe 22, die Förderleitung 20, der Anschlußstutzen 72, der Druckraum 70, die Überströmkanäle 55, die Ringnut 57, die Querbohrung 56 und die Zentralbohrung 58 des Düsenträgers 38.

Nach dem Öffnen des Schalters 27 wird die Förderpumpe 22 stillgesetzt und die Schraubendruckfeder 42 drückt den Kolben 36, 44 wieder in seine Ausgangsposition zurück, wobei er entgegen der Richtung des Pfeiles 75 verschoben wird. In seiner Endstellung läuft der Kolben mit seiner Stirnfläche 62 gegen den O-Ring 64, so daß er ein Rückschlagventil bildet, welches verhindert, daß das System leerläuft. Die Auslegung der Förderpumpe 22 ist so getroffen, daß nach dem Schließen des Schalters 26 die Waschflüssigkeit den Kolben 36, 44 schlagartig um das Maß 48 verschiebt, so daß ein vorzeitiges Sprühen von Waschflüssigkeit aus der Spritzdüse 26 vermieden ist. Dies wird dadurch unterstützt, daß der Teil 36 des Kolbens das Teilstück 51 der Überströmkanäle 52 erst kurz vor Erreichen der Betriebsstellung (Figur 4) freigibt.

**Ansprüche**

1. Waschanlage für Scheiben von Kraftfahrzeugen, insbesondere für Abdeckscheiben von Kraftfahrzeugleuchten, mit einem Vorratsbehälter (18) für die Waschflüssigkeit, der mit einer zu einer Sprüheinrichtung (14) gehörenden, auf die Scheibe gerichteten Spritzdüse (26) leitungsverbunden ist und mit einer an einer Förderleitung (20) angeschlossenen Fördereinrichtung (22) für die Waschflüssigkeit, wobei die Sprüheinrichtung (14) einen gestellfesten Zylinder (32) aufweist, in dem ein Kolben (36,44) gegen Federkraft aus einer Ruhestellung in eine Betriebsstellung bringbar ist, der Kolben (36,44) einen aus dem Zylinder (32) ragenden, langgestreckten Düsenträger (38) hat, an dessen von dem Kolben (36,44) abgewandten Ende (40) die Spritzdüse (26) sitzt und der von der Fördereinrichtung (22) kommende Abschnitt der Verbindungsleitung (20) in einen Druckraum (70) des Zylinders (32) mündet, der sich auf der von dem Düsenträger (38) abgewandten Seite des Kolbens (36,44) befindet, dadurch gekennzeichnet, daß die den Kolben (36, 44) führende Zylinder-Innenwand (52) wenigstens einen sich in Kolben-Verstellrichtung (74) erstreckenden, zur Verbindungsleitung (22, 20, 72, 70, 55, 57, 56, 58) gehörenden Überströmkanal (55) hat, der in Betriebsstellung des Kolbens (36, 44) geöffnet und in dessen Ruhestellung durch diesen verschlossen ist.

2. Waschanlage nach Anspruch 1, bei der die Feder eine den Düsenträger umgebende Schrauben-Druckfeder ist, die sich einerseits am Kolben und andererseits an einer bezüglich des Kolbens auf der vom Druckraum abgewandten Seite befindlichen Schulter des Zylinders vorgespannt abstützt, dadurch gekennzeichnet, daß der Kolben (36) einen die Feder (42) umgebenden hülsenförmigen Ansatz (44) hat, dessen freie Stirnfläche (46) mit einer ihr zugewandten Stirnwand (56) des Zylinders (32) eine Begrenzung für den Kolbenhub (48) bildet.

3. Waschanlage nach einem der Ansprüche 1 oder 2, dadurch gekennzeichnet, daß die Zylinderinnenwand (52) mehrere Kanäle (55) aufweist und daß wenigstens einer dieser Kanäle über den gesamten Kolbenhub (48) eine Führung für einen radialen Vorsprung (54) des Kolbens (36, 44) bildet.

4. Waschanlage nach Anspruch 3, dadurch gekennzeichnet, daß die Länge des Überströmkanals (52), ausgehend von der Stirnwand (50) des Zylinders (32) größer ist als die Länge des Kolbens (36) zu dem der hülsenförmige Ansatz (44) gehört.

5. Waschanlage nach Anspruch 4, bei der der Düsenträger eine zur Verbindungsleitung gehörende Längsbohrung aufweist, dadurch gekennzeichnet, daß die Längsbohrung (58) in eine im Kolben (36, 44) angeordnete Querbohrung (56) übergeht, die vorzugsweise beidseitig in eine am Kolbenmantel angeordnete Ringnut (57) mündet.

6. Waschanlage nach einem der Ansprüche 1 bis 5, dadurch gekennzeichnet, daß im Druckraum (70) an der Innenseite einer der Zylinderwände (62 bzw. 34 bzw. 52) ein ringförmiges Dichtungselement (64) gehalten ist, an dem die den Druckraum (70) begrenzende Stirnfläche (62) des Kolbens (36, 44) in seiner Ruhestellung anliegt.

7. Waschanlage nach Anspruch 6, dadurch gekennzeichnet, daß das Dichtungselement (64) an der inneren Mantelfläche (52) des Zylinders (32) im Druckraum (70) gehalten ist.

8. Waschanlage nach einem der Ansprüche 1 bis 7, dadurch gekennzeichnet, daß der Kolben (36, 44) vorzugsweise im Bereich der Ringnut (57) passend an der Zylinder-Innenwand (52) geführt ist.

## Claims

1. Washing arrangement for motor vehicle shields, in particular for motor vehicle lamp shields, having a supply reservoir (18) for the washing liquid, which supply reservoir (18) is conductively connected to a spray nozzle (26) belonging to a spray device (14) and directed towards the shield, and to a feed device (22) attached to a feed line (20) for the washing liquid, in which arrangement the spray device (14) has a fixed cylinder (32) in which a piston (36, 44) can be moved against spring force from an inoperative position into an operating position, the piston (36, 44) has an elongated nozzle carrier (38) which projects from the cylinder (32) and on whose end (40) remote from the piston (36, 44) the spray nozzle (26) sits, and the connecting-line portion (20) coming from the feed device (22) leads into a pressure space (70) of the cylinder (32) which is located on the side of the piston (36, 44) remote from the nozzle carrier (38), characterized in that the cylinder inner wall (52) guiding the piston (36, 44) has at least one transfer channel (55) which extends in the piston displacement direction (74) [sic], belongs to the connecting line (22, 20, 72, 70, 55, 57, 56, 58), is open in the operating position of the piston (36, 44) and is closed by the piston (36, 44) in the inoperative position of the same.

2. Washing arrangement according to Claim 1, in which the spring is a helical compression spring which surrounds the nozzle carrier and is supported on the piston on the one hand and on a shoulder of the cylinder on the other hand, which shoulder, relative to the piston, is located on the side remote from the pressure space, characterized in that the piston (36) has a sleeve-shaped extension (44) which surrounds the spring (42) and whose free end face (46), with an end wall (56) [sic] of the cylinder (32) facing it, forms a limit for the piston stroke (48).

3. Washing arrangement according to either of Claims 1 or 2, characterized in that the cylinder inner wall (52) has a plurality of channels (55), and in that at least one of these channels, over the entire piston stroke (48), forms a guide for a radial projection (54) of the piston (36, 44).

4. Washing arrangement according to Claim 3, characterized in that the length of the transfer channel (52) [sic], starting from the end wall (50) of the cylinder (32), is greater than the length of the piston (36) to which the sleeve-shaped extension (44) belongs.

5. Washing arrangement according to Claim 4, in which the nozzle carrier has a longitudinal bore belonging to the connecting line, characterized in that the longitudinal bore (58) merges into a transverse bore (56) which is arranged in the piston (36, 44) and preferably leads on either side into an annular groove (57) arranged on the piston circumference.

6. Washing arrangement according to one of Claims 1 to 5, characterized in that an annular sealing element (64) is held in the pressure space (70) on the inside of one of the cylinder walls (62 or 34 or 52), on which sealing element (64) the end face (62) of the piston (36, 44) bears in the inoperative position of the latter, which end face (62) delimits the pressure space (70).

7. Washing arrangement according to Claim 6, characterized in that the sealing element (64) is held on the inner circumference (52) of the cylinder (32) in the pressure space (70).

8. Washing arrangement according to one of Claims 1 to 7, characterized in that the piston (36, 44) is guided in a well-fitting manner on the cylinder inner wall (52) preferably in the area of the annular groove (57).

**Revendications**

1. Installation de lavage pour vitres de véhicules automobiles, en particulier pour couvercles de phares de véhicules automobiles, avec un réservoir (18) pour le liquide de lavage, qui est relié par un conduit à un pulvérisateur (26) faisant partie d'un dispositif de pulvérisation (14) et dirigé vers la vitre et avec une installation de transfert (22) pour le liquide de lavage, branchée sur le conduit de transfert (20), le dispositif de pulvérisation (14) comprenant un cylindre (32) de bâti fixe, dans lequel peut se déplacer un piston (36, 44) contre la force d'un ressort d'une position de repos à une position de travail, le piston (36, 44) a un porte-tuyère (38) se développant dans le sens longitudinal, dépassant du cylindre (32) et sur l'extrémité (40) duquel, opposée au piston (36, 44) est fixé le pulvérisateur (26) et le tronçon du conduit de transfert (20) venant de l'installation de transfert (22) débouche dans une chambre de pression (70) du cylindre (32) qui se trouve du côté du piston (36, 44) opposé au support de tuyère (38), caractérisée en ce que la paroi intérieure du cylindre (52) guidant le piston (36, 44) a au moins un canal de passage (55) se développant dans le sens de déplacement du piston (74), appartenant au conduit de raccordement (22, 20, 72, 70, 55, 57, 56, 58), ce canal étant ouvert dans la position de travail du piston (36, 44) et étant fermé par celui-ci même dans sa position de repos.

2. Installation de lavage selon la revendication 1, dans laquelle le ressort est un ressort de pression hélicoïdal entourant le support de tuyère, ressort qui s'appuie en précontrainte d'un côté sur le piston et de l'autre côté sur un épaulement relatif au piston se trouvant du côté opposé à la chambre de pression, caractérisée en ce que le piston (36) a une rallonge (44) en forme de manchon entourant le ressort (42), et dont la face frontale libre (46) forme avec une paroi frontale (50) du cylindre 32 une limitation pour la course du piston (48).

3. Installation de lavage selon une des revendications 1 ou 2, caractérisée en ce que la paroi intérieure du cylindre (52) comporte plusieurs canaux (55) et en ce qu'au moins un de ces canaux forme sur la course totale (48) un guidage pour une saillie (54) radiale du piston (36, 44).

4. Installation de lavage selon la revendication 3, caractérisée en ce que la longueur du canal de passage (52) partant de la paroi frontale (50) du cylindre (32) est plus grande que la longueur du piston (36) auquel appartient la rallonge (44) en forme de manchon.

5. Installation de lavage selon la revendication 4, dans laquelle le support de tuyère comporte un alésage longitudinal faisant partie du conduit de raccordement , caractérisée en ce que l'alésage longitudinal (58) se convertit en un alésage transversal (56) placé dans le piston (36, 44) qui débouche de préférence des deux côtés dans une rainure annulaire (57) disposée sur l'enveloppe du piston.

6. Installation de lavage selon une des revendications 1 à 5, caractérisée en ce que dans la chambre de pression (70) contre le côté intérieur d'une des parois du cylindre (62 ou 34 ou 52) est maintenu un élément d'étanchéité annulaire (64), sur lequel adhère la face frontale (62) du piston (36, 44) dans sa position de repos, délimitant ainsi la chambre de pression (70).

7. Installation de lavage selon la revendication 6, caractérisée en ce que l'élément d'étanchéité (64) est maintenu contre la surface intérieure enveloppe (52) du cylindre (32) dans la chambre de pression (70).

8. Installation de lavage selon une des revendications 1 à 7, caractérisée en ce que le piston (36, 44) est guidé de préférence dans la zone de la rainure annulaire (57) à la mesure de la paroi intérieure (52) du cylindre.

FIG.1

FIG.2

FIG.3

FIG.4

FIG.5